# EUROPEAN PATENT APPLICATION

(11) **EP 4 156 027 A1**
(43) Date of publication of application: **29.03.2023**
(21) Application number: 21828109.5
(22) Date of filing: 26.05.2021
(51) Int. Cl.: G06N 3/04, G06N 3/08

(54) **NEURAL NETWORK ARCHITECTURE SEARCH METHOD, APPARATUS AND SYSTEM**

(30) Priority: 22.06.2020 CN 202010571958
(71) Applicant: Huawei Technologies Co., Ltd., Longgang District Shenzhen, Guangdong 518129 (CN)
(72) Inventor: CHEN, Jiazhong, Shenzhen, Guangdong 518129 (CN); WANG, Sheng, Shenzhen, Guangdong 518129 (CN); WANG, Hengming, Shenzhen, Guangdong 518129 (CN)
(74) Representative: MERH-IP Matias Erny Reichl Hoffmann Patentanwälte PartG mbB
(86) International application number: PCT/CN2021/095918
(87) International publication number: WO 2021/258964

(57) **Abstract**

This application relates to the field of artificial intelligence, and specifically, to the field of computer vision. This application provides a neural architecture search method, apparatus, and system. The method includes: determining a channel quantity of each convolution layer in a convolutional neural network, where the channel quantity of a first convolution layer is proportional to that of a second convolution layer; constructing a search space of the convolutional neural network based on the channel quantity of each convolution layer; and searching for a neural architecture of the convolutional neural network based on the search space of the convolutional neural network. A ratio constraint on a channel quantity of a convolution layer is set, so that a total quantity of combinations of channel quantities can be reduced, and the search space of the convolutional neural network is reduced. Therefore, a calculation amount of convolutional neural network search can be reduced.

## Description

This application claims priority to Chinese Patent Application No. 202010571958.1, filed with the China National Intellectual Property Administration on June 22, 2020 and entitled "NEURAL ARCHITECTURE SEARCH METHOD, APPARATUS, AND SYSTEM", which is incorporated herein by reference in its entirety.

### TECHNICAL FIELD

This application relates to the field of computer vision, and in particular, to a neural architecture search method, apparatus, and system.

### BACKGROUND

Neural architecture search (neural architecture search, NAS) is a very popular subfield in the field of automated machine learning. The neural architecture search means that the optimal neural architecture is automatically searched out from a large quantity of neural architectures by using algorithms in place of tedious manual operations, that is, the optimal neural architecture is automatically searched out by machines. The convolutional neural architecture search, as the name suggests, is neural architecture search for a convolutional neural network.

Currently, the convolutional neural architecture search has a problem that a calculation amount is huge.

### SUMMARY

This application provides a neural architecture search method, apparatus, and system. A ratio constraint on a channel quantity of a convolution layer is set, so that a total quantity of combinations of channel quantities can be reduced, and a search space of a convolutional neural network is reduced. Therefore, a calculation amount of convolutional neural network search can be reduced.

According to a first aspect, a neural architecture search method is provided. The method includes: determining a channel quantity of each convolution layer in a convolutional neural network, where the channel quantity of a first convolution layer is proportional to that of a second convolution layer; constructing a search space of the convolutional neural network based on the channel quantity of each convolution layer; and searching for a neural architecture of the convolutional neural network based on the search space of the convolutional neural network.

The channel quantity of the convolution layer mentioned in the technical solutions provided in this application means a quantity of output channels of the convolution layer.

That the channel quantity of the first convolution layer is proportional to that of the second convolution layer indicates that the channel quantity of the first convolution layer changes proportionally with a change of the channel quantity of the second convolution layer, or conversely, the channel quantity of the second convolution layer changes proportionally with a change of the channel quantity of the first convolution layer.

That the channel quantity of the first convolution layer is proportional to that of the second convolution layer may be further expressed as that the first convolution layer has a channel quantity constraint with the second convolution layer.

The ratio constraint on the channel quantity of the convolution layer is set, so that a total quantity of combinations of channel quantities can be reduced, and a search space of the convolutional neural network is reduced. Therefore, a calculation amount of convolutional neural network search is reduced.

Optionally, each convolution layer in the convolutional neural network has a channel quantity constraint with another convolution layer.

A ratio constraint between each convolution layer in the convolutional neural network with another convolution layer is set, so that a total quantity of combinations of channel quantities can be further reduced. Therefore, a calculation amount of convolutional neural network search is further reduced.

Optionally, some convolution layers in the convolutional neural network have a channel quantity constraint.

The first convolution layer may have a channel quantity constraint with one or more other convolution layers.

With reference to the first aspect, in a possible implementation of the first aspect, convolution layers of the convolutional neural network include a third convolution layer, where a channel quantity of the third convolution layer is also proportional to that of the first convolution layer.

A ratio constraint between a same convolution layer and a plurality of convolution layers is set, so that a total quantity of combinations of channel quantities can be further reduced, and a search space of a convolutional neural network is further reduced. Therefore, a calculation amount of convolutional neural network search can be further reduced.

The first convolution layer and the second convolution layer may be consecutive layers, or may be non-consecutive layers. In other words, two convolution layers with a channel quantity constraint may be consecutive layers, or may be non-consecutive layers.

With reference to the first aspect, in a possible implementation of the first aspect, the first convolution layer and the second convolution layer are two consecutive convolution layers in the convolutional neural network.

A channel quantity constraint between two consecutive convolution layers in the convolutional neural network is set, so that a basic shape of the convolutional neural architecture can be controlled by setting a channel quantity ratio between the convolution layers, to help construct a good convolutional neural architecture.

With reference to the first aspect, in a possible implementation of the first aspect, the first convolution layer is a convolution layer previous to the second convolution layer; convolution layers of the convolutional neural network include a fourth convolution layer, and the fourth convolution layer is a convolution layer next to the second convolution layer, where a ratio obtained by dividing the channel quantity of the second convolution layer by the channel quantity of the fourth convolution layer is equal to a ratio obtained by dividing the channel quantity of the first convolution layer by the channel quantity of the second convolution layer.

A same channel quantity ratio between every two consecutive convolution layers in the convolutional neural network is set, so that a basic shape of the convolutional neural architecture can be controlled better, to help construct a better convolutional neural architecture.

With reference to the first aspect, in a possible implementation of the first aspect, the determining a channel quantity of each convolution layer in a convolutional neural network includes: randomly selecting a first value from a preset value range as a channel quantity ratio between the first convolution layer and the second convolution layer; and determining, based on a product of the first value and the channel quantity of the second convolution layer, that the channel quantity of the first convolution layer is a second value.

It should be understood that, the second value is an integer. If the product of the first value and the channel quantity of the second convolution layer is an integer, the product of the first value and the channel quantity of the second convolution layer may be used as the second value. If the product of the first value and the channel quantity of the second convolution layer is a decimal, rounding processing may be performed on the product of the first value and the channel quantity of the second convolution layer, where the rounding processing may be rounding up or rounding down.

With reference to the first aspect, in a possible implementation of the first aspect, before the constructing a search space of the convolutional neural network based on the channel quantity of each convolution layer, the method further includes: randomly selecting a third value near the second value, and updating the channel quantity of the first convolution layer as the third value.

Optionally, the third value may be randomly selected from values whose absolute values of differences from the second value fall within a threshold range.

Optionally, the third value may be a multiple of the second value.

A rule for obtaining the third value based on the second value may be flexibly determined based on a specific requirement.

Channel quantity ratios between a plurality of convolution layers with channel quantity constraints may be randomly selected. This helps construct convolutional neural architectures with different shapes, thereby implementing full search for convolutional neural architectures.

With reference to the first aspect, in a possible implementation of the first aspect, the constructing a search space of the convolutional neural network based on the channel quantity of each convolution layer includes: constructing the search space of the convolutional neural network based on the channel quantity of each convolution layer, and a layer quantity of the convolutional neural network and a size of a convolution kernel on each convolution layer.

The channel quantity of each convolution layer with a channel quantity constraint may be randomly selected near a value calculated based on a channel quantity ratio. This facilitates full search for convolutional neural architectures.

With reference to the first aspect, in a possible implementation of the first aspect, the convolutional neural network is applied to an image processing task; and the searching for a neural architecture of the convolutional neural network based on the search space of the convolutional neural network includes: searching for the neural architecture of the convolutional neural network based on the search space of the convolutional neural network by using training data of the image processing task.

According to a second aspect, a neural architecture search apparatus is provided. The apparatus includes a determining unit, a construction unit, and a search unit. The determining unit is configured to determine a channel quantity of each convolution layer in a convolutional neural network, where the channel quantity of a first convolution layer is proportional to that of a second convolution layer. The construction unit is configured to construct a search space of the convolutional neural network based on the channel quantity of each convolution layer. The search unit is configured to search for a neural architecture of the convolutional neural network based on the search space of the convolutional neural network.

With reference to the second aspect, in a possible implementation of the second aspect, convolution layers of the convolutional neural network include a third convolution layer, where a channel quantity of the third convolution layer is also proportional to that of the first convolution layer.

With reference to the second aspect, in a possible implementation of the second aspect, the first convolution layer and the second convolution layer are two consecutive convolution layers in the convolutional neural network.

With reference to the second aspect, in a possible implementation of the second aspect, the first convolution layer is a convolution layer previous to the second convolution layer; convolution layers of the convolutional neural network include a fourth convolution layer, and the fourth convolution layer is a convolution layer next to the second convolution layer, where a ratio obtained by dividing the channel quantity of the second convolution layer by the channel quantity of the fourth convolution layer is equal to a ratio obtained by dividing the channel quantity of the first convolution layer by the channel quantity of the second convolution layer.

With reference to the second aspect, in a possible implementation of the second aspect, the determining unit is configured to: randomly select a first value from a preset value range as a channel quantity ratio between the first convolution layer and the second convolution layer; and determine, based on a product of the first value and the channel quantity of the second convolution layer, that the channel quantity of the first convolution layer is a second value.

With reference to the second aspect, in a possible implementation of the second aspect, the determining unit is further configured to: before the construction unit constructs the search space of the convolutional neural network based on the channel quantity of each convolution layer, randomly select a third value near the second value, and update the channel quantity of the first convolution layer as the third value.

With reference to the second aspect, in a possible implementation of the second aspect, the construction unit is configured to construct the search space of the convolutional neural network based on the channel quantity of each convolution layer, and a layer quantity of the convolutional neural network and a size of a convolution kernel on each convolution layer.

With reference to the second aspect, in a possible implementation of the second aspect, the convolutional neural network is applied to an image processing task; and the search unit is configured to: search for the neural architecture of the convolutional neural network based on the search space of the convolutional neural network by using training data of the image processing task.

According to a third aspect, a data processing apparatus is provided, including: a memory, configured to store programs; and a processor, configured to execute the programs stored in the memory, where when the programs stored in the memory are executed, the processor is configured to perform the method provided in the first aspect.

According to a fourth aspect, a server device is provided, including a storage module, the neural architecture search apparatus provided in the second aspect, and an output module. The storage module is configured to store training data required for convolutional neural architecture search. The neural architecture search apparatus is configured to perform neural architecture search on a convolutional neural network by using the training data stored in the storage module. The output module is configured to output the convolutional neural architecture obtained by the neural architecture search apparatus through searching.

According to a fifth aspect, a neural architecture search system is provided, including a neural architecture running platform and the server device provided in the fourth aspect. The server device is configured to deploy a convolutional neural architecture obtained through searching onto the neural architecture running platform. The neural architecture running platform is configured to run the deployed convolutional neural architecture.

According to a sixth aspect, a computer-readable medium is provided. The computer-readable medium stores program code for execution by a device, and the program code includes code used to perform the method provided in the first aspect.

According to a seventh aspect, a computer program product including instructions is provided. When the computer program product is run on a computer, the computer is enabled to perform the method provided in the first aspect.

According to an eighth aspect, a chip is provided. The chip includes a processor and a data interface. The processor reads, by using the data interface, instructions stored in a memory, to perform the method provided in the first aspect.

Optionally, in an implementation, the chip may further include a memory, the memory stores instructions, the processor is configured to execute the instructions stored in the memory, and when the instructions are executed, the processor is configured to perform the method provided in the first aspect.

It can be learned based on the foregoing description that, in this application, a ratio constraint on a channel quantity of a convolution layer is set, so that a total quantity of combinations of channel quantities can be reduced, and a search space of a convolutional neural network is reduced. Therefore, a calculation amount of convolutional neural network search is reduced.

### BRIEF DESCRIPTION OF DRAWINGS

FIG. 1 is a schematic diagram of a four-layer convolutional neural architecture;
FIG. 2 is a schematic block diagram of a convolutional neural architecture search system to which embodiments of this application are applicable;
FIG. 3 is a schematic block diagram of a library 213 for convolutional neural architecture search in FIG. 2;
FIG. 4 is a schematic flowchart of a neural architecture search method according to an embodiment of this application;
FIG. 5 is a schematic diagram of a convolutional neural architecture;
FIG. 6 is another schematic flowchart of a neural architecture search method according to an embodiment of this application;
FIG. 7 is a schematic flowchart of a method for obtaining a channel quantity on a convolution layer according to an embodiment of this application;
FIG. 8 is a schematic flowchart of a method for randomly generating a skip connection according to an embodiment of this application;
FIG. 9 is a diagram of comparison between simulation effects of a convolutional neural architecture obtained through searching according to an embodiment of this application and a convolutional neural architecture that is obtained through artificial searching.
FIG. 10 is a schematic block diagram of a neural architecture search apparatus according to an embodiment of this application;
FIG. 11 is another schematic block diagram of a neural architecture search apparatus according to an embodiment of this application;
FIG. 12 is still another schematic block diagram of a neural architecture search apparatus according to an embodiment of this application;
FIG. 13 is a schematic flowchart of performing convolutional neural architecture search by the apparatus shown in FIG. 12;
FIG. 14 is a schematic block diagram of a server device according to an embodiment of this application;
FIG. 15 is a schematic block diagram of a neural architecture search system according to an embodiment of this application; and
FIG. 16 is a schematic diagram of a hardware structure of a chip according to an embodiment of this application.

### DESCRIPTION OF EMBODIMENTS

Machine learning (machine learning) is a science of artificial intelligence (artificial intelligence, AI). Deep learning (deep learning) is a branch of machine learning, and is an algorithm that uses an artificial neural network (artificial neural network, ANN) as an architecture to perform representational learning on data. The artificial neural network is a mathematical or computational model that imitates a structure and a function of a biological neural network (for example, a central nervous system of an animal, especially brain) in the fields of machine learning and cognitive science, for estimating or approximating functions. The artificial neural network may be briefly referred to as a neural network (neural network, NN) or a neural network.

The neural architecture required by deep learning usually adopts an artificial design at a primary stage, but the artificial design has the following problems: A designer needs to have very professional skills; the designer needs to spend a lot of time on neural architecture search; and because a search space of the neural architecture is usually very large and artificial search is very limited, it is difficult to find an optimal neural architecture. Therefore, the artificial design of the neural architecture has problems of high labor costs, high time costs, and a difficulty to achieve optimality.

Because the artificial design of the neural architecture has the foregoing problems, automated machine learning (automated machine learning, AutoML) gradually becomes popular, and neural architecture search (neural architecture search, NAS) is a very popular subfield of automated machine learning. The so-called neural architecture search means that the optimal neural architecture is automatically searched out from a large quantity of neural architectures by using algorithms in place of tedious manual operations, that is, the optimal neural architecture is automatically searched out by machines. A process of neural architecture search usually includes generating, training, evaluating a large number of possible neural architectures, and then selecting the optimal neural architecture.

The convolutional neural architecture search, as the name suggests, is neural architecture search for a convolutional neural network (CNN), that is, automated search is performed on the convolutional neural architecture.

A convolutional neural network is a neural network that includes a convolution layer (convolution layer). Main characteristics of the convolutional neural network include: a layer quantity of the network, a size of a convolution kernel of the convolution layer, a channel quantity of the convolution layer, a skip connection, and the like. Therefore, during the convolutional neural architecture search, the most important thing is to search for the layer quantity of the convolutional neural architecture, the size of the convolution kernel of the convolution layer, the channel quantity of the convolution layer, the skip connection, and the like. For example, in some cases, the layer quantity of the convolutional neural architecture may also be preset. In this case, during the convolutional neural architecture search, other main features of the convolutional neural architecture, for example, the size of the convolution kernel of the convolution layer, the channel quantity of the convolution layer, and the skip connection are mainly searched for.

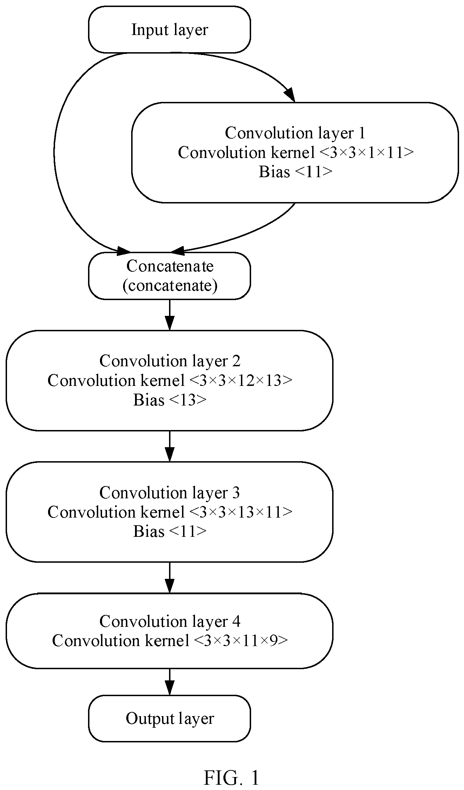

For example, FIG. 1 is a schematic diagram of a four-layer convolutional neural architecture. It should be understood that, layers of the convolutional neural architecture do not include an input layer (input) and an output layer (output), and that the network has four layers means that there are four convolution layers (for example, a convolution layer 1, a convolution layer 2, a convolution layer 3, and a convolution layer 4 in FIG. 1) between the input layer and the output layer. Each convolution layer in FIG. 1 may be a two-dimensional convolution layer (2D convolution layer, Conv2D). Parameters on each convolution layer are shown in FIG. 1. Using the convolution layer 1 as an example, a convolution kernel (kernel) <3×3×1×11> represents that a size of the convolution kernel (kernel) is 3×3, a quantity of input channels is 1, and a quantity of output channels is 11; and a bias (bias) <11> represents that a bias is 11. In the example of FIG. 1, the convolution layers 1, 2, and 3 are convolution layers with a bias (bias), and the convolution layer 4 is a convolution layer without a bias (bias). In FIG. 1, that a skip connection is concatenate (concatenate) is used as an example. Concatenate (concatenate) means that the input layer (input) is connected to the convolution layer 1 as an input of a next convolution layer (that is, the convolution layer 2 shown in FIG. 1).

In the example of FIG. 1, it is assumed that the layer quantity of the network is preset, during the convolutional neural network search, the size of the convolution kernel of the convolution layer, the channel quantity of the convolution layer, and the skip connection are mainly searched for. The channel quantity of the convolution layer is a quantity of output channels.

FIG. 1 is merely an example of a convolutional neural architecture and is not a limitation.

For example, the layer quantity of the convolutional neural architecture may be smaller or larger.

It should be understood that, the skip connection includes two manners: concatenate (concatenate) and add (add). The concatenate (concatenate) means that outputs of a plurality of layers are connected and used as an input of another layer. Add means that outputs of a plurality of layers are added together and used as an input of another layer. A skip connection between two layers is used as an example. If the skip connection manner of the two layers is concatenate (concatenate), assuming that the quantity of output channels of the first layer is a, and the quantity of output channels of the second layer is b, the outputs of the two layers are connected to form a total channel quantity of a+b, which is used as an input of another layer. If the skip connection manner of the two layers is add (add), quantities of output channels of the two layers are the same. Assuming that the quantities of output channels of the two layers are both a, after outputs of the two layers are added, the quantity of output channels is still a, which is used as an input of another layer.

In FIG. 1, for example, the skip connection is concatenate (concatenate) between the input layer (input) and the convolution layer 1. This is not limited in embodiments of this application. For example, the skip connection may also be for a plurality of other layers, and a manner of the skip connection may be concatenate (concatenate) or add (add) (quantities of output channels of a plurality of layers on which addition is performed need to be the same).

During existing convolutional neural architecture search, a search space of the neural architecture is huge. Using a five-layer convolutional neural architecture as an example, assuming that there are two convolutional kernel sizes (for example, 1×1 and 3×3), and that there are 20 optional channel quantities (for example, a value range of the channel quantity is [5, 24]), there are at least 10 possibilities of the skip connection (4+3+2+1=10), there are a total of 32 (2 to the power of 5) combinations of convolution kernel sizes, there are a total of 3.2 million (20 to the power of 5) combinations of channel quantities, and a total quantity of possible convolutional neural networks is 1.024 billion (10×32×3.2 million=1.024 billion), that is, a maximum search space of the neural architecture may be 1.024 billion.

It should be understood that, the search space of the neural architecture is large, resulting in a huge calculation amount of convolutional neural network search, and a quantity of processor modules required to perform the convolutional neural network search (for example, a graphics processing unit (graphics processing unit, GPU)) is also large.

For the foregoing technical problem, embodiments of this application provide a neural architecture search method and apparatus. A channel quantity constraint on a convolution layer in a convolutional neural network is set, so that a search space of the convolutional neural network can be greatly reduced. In this way, a calculation amount of convolutional neural network search can be reduced. Correspondingly, a quantity of GPUs required to perform a convolutional neural architecture search can be reduced.

For ease of understanding of embodiments of this application, the following first describes an application scenario of embodiments of this application by using examples.

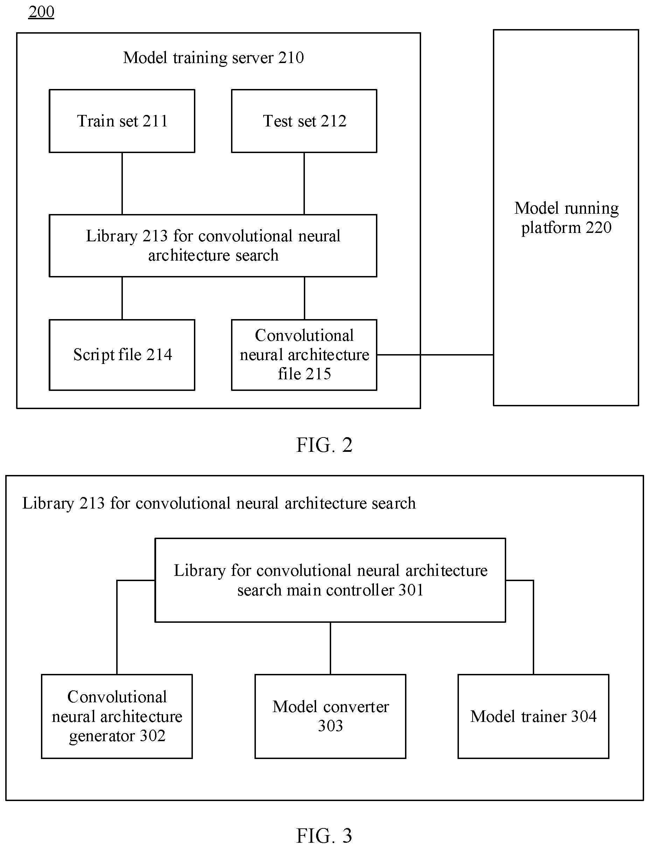

FIG. 2 is a schematic block diagram of a convolutional neural architecture search system 200 to which embodiments of this application are applicable. The convolutional neural architecture search system 200 includes a model training server 210 and a model running platform 220.

The model training server 210 is configured to: search for a neural architecture of a convolutional neural network, and deploy the convolutional neural architecture obtained through searching on the model running platform 220.

The model training server 210 is a carrier of data and software, and is also a hardware basis for software running.

The model running platform 220 is configured to run the deployed convolutional neural architecture.

The model running platform 220 may be a terminal or another application platform. When the model running platform 220 is a terminal, the system 200 may be referred to as a terminal-server system. For example, the model running platform 220 is a mobile phone.

As shown in FIG. 2, the model training server 210 includes a train set 211, a test set 212, a library 213 for convolutional neural architecture search, a script file 214, and a convolutional neural architecture file 215.

The library 213 for convolutional neural architecture search is used to perform convolutional neural architecture search.

The script file 214 is configured to store related parameters. In an application, the library 213 for convolutional neural architecture search may be invoked by using the script file 214.

The train set 211 and the test set 212 are used to provide a data set required when the library 213 for convolutional neural architecture search performs convolutional neural architecture search.

In machine learning, a sample is generally divided into three parts: a train set (train set), a validation set (validation set), and a test set (test set). The train set is used to establish a model, and the test set is used to test performance of a finally selected optimal model.

The convolutional neural architecture file 215 represents a neural architecture output by the library 213 for convolutional neural architecture search, that is, the optimal convolutional neural architecture obtained through searching. The convolutional neural architecture file 215 indicates that the convolutional neural architecture obtained through searching is represented in a file format.

It may be understood that the model training server 210 deploys the convolutional neural architecture file 215 to the model running platform 220.

For example, as shown in FIG. 3, the library 213 for convolutional neural architecture search includes a library for convolutional neural architecture search main controller 301, a convolutional neural architecture generator 302, a model converter 303, and a model trainer 304.

The library for convolutional neural architecture search main controller 301 is configured to control the convolutional neural architecture generator 302, the model converter 303, and the model trainer 304. The library for convolutional neural architecture search main controller 301 is invoked by the script file 214.

The convolutional neural architecture generator 302 is configured to generate a convolutional neural architecture. It may be understood that the convolutional neural architecture generator 302 is configured to construct a search space of the convolutional neural architecture.

The model converter 303 is configured to convert the convolutional neural architecture generated by the convolutional neural architecture generator 302 into a convolutional neural network model.

The model trainer 304 is configured to train the convolutional neural network model obtained through conversion by the model converter 303, to obtain an evaluation index of the convolutional neural network model.

For example, a process in which the model training server 210 obtains the convolutional neural architecture file 215 through searching is as follows.
(1) Obtain a data set, including a train set 211 and a test set 212.

For example, a data set required by a corresponding scenario may be obtained based on a specific scenario.

(2) Set related parameters in the script file 214. The related parameters mean parameters required when the library 213 for convolutional neural architecture search runs.

For example, the related parameters set in the script file 214 include the following parameters:
a path of the train set 211, a path of the test set 212, a layer quantity of the convolutional neural architecture, a total parameter quantity, and total time for convolutional neural architecture search.

It should be understood that the related parameters may be set in the script file 214 as required based on a running condition of the library 213 for convolutional neural architecture search. For example, in addition to the foregoing parameters, the related parameters set in the script file 214 may include other parameters. In another example, the related parameters set in the script file 214 may alternatively not include one or more of the foregoing parameters. This is not limited in this application.

(3) The library 213 for convolutional neural architecture search is invoked by using the script file 214 for automated convolutional neural architecture search.

For example, when the script file 214 invokes the library 213 for convolutional neural architecture search, the related parameters mentioned in step (2) are transmitted to the library 213 for convolutional neural architecture search. The library 213 for convolutional neural architecture search performs convolutional neural architecture search based on the related parameters set in the script file 214.

(4) After search of the library 213 for convolutional neural architecture search is completed, the library 213 for convolutional neural architecture search outputs an optimal convolutional neural architecture, that is, the convolutional neural architecture file 215, and the model training server 210 deploys the convolutional neural architecture file 215 on the model running platform 220.

For example, when the total time for the convolutional neural architecture search runs out, the library 213 for convolutional neural architecture search ends the convolutional neural architecture search and outputs the convolutional neural architecture file 215 obtained in the search process.

The following describes embodiments of this application with reference to the accompanying drawings.

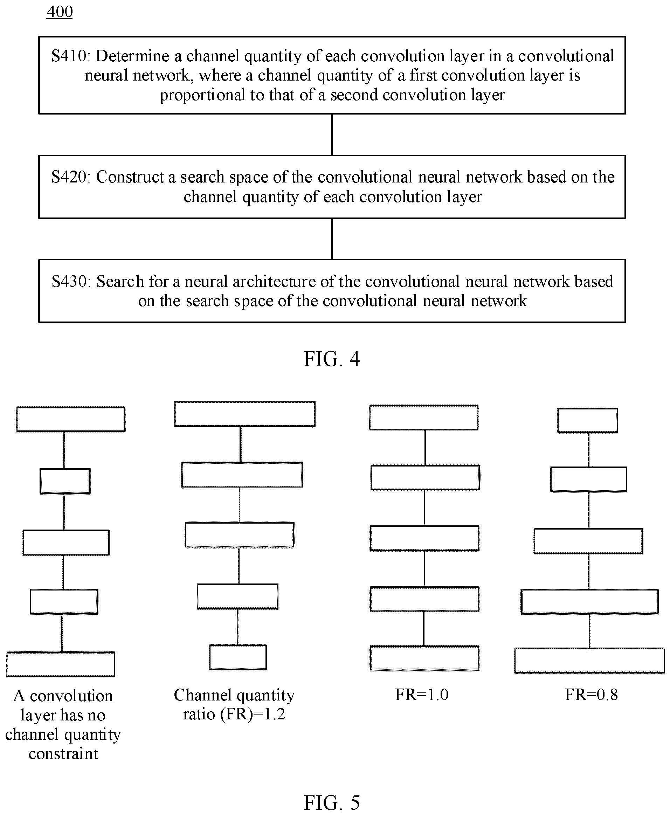

FIG. 4 is a schematic flowchart of a neural architecture search method 400 according to an embodiment of this application. For example, an execution body of the method 400 is the library 213 for convolutional neural architecture search shown in FIG. 2. The method 400 includes step S410, step S420, and step S430.

S410: Determine a channel quantity of each convolution layer in a convolutional neural network, where the channel quantity of a first convolution layer is proportional to that of a second convolution layer.

The convolutional neural network means a neural network on which convolutional neural architecture search is to be performed.

The channel quantity of the convolution layer mentioned in this embodiment of this application means a quantity of output channels of the convolution layer.

That the channel quantity of the first convolution layer is proportional to that of the second convolution layer indicates that the channel quantity of the first convolution layer changes proportionally with a change of the channel quantity of the second convolution layer, or conversely, the channel quantity of the second convolution layer changes proportionally with a change of the channel quantity of the first convolution layer.

For example, a ratio obtained by dividing the channel quantity of the first convolution layer by the channel quantity of the second convolution layer is denoted as R1. If the channel quantity of the second convolution layer is c1, the channel quantity of the first convolution layer is R1×c1; or if the channel quantity of the second convolution layer is c2, the channel quantity of the first convolution layer is R1×c2.

For brevity of description, in the following, the ratio between the channel quantity of the first convolution layer and the channel quantity of the second convolution layer is denoted as a channel quantity ratio between the first convolution layer and the second convolution layer.

The channel quantity ratio between the first convolution layer and the second convolution layer may be defined as a ratio obtained by dividing the channel quantity of the first convolution layer by the channel quantity of the second convolution layer, or a ratio obtained by dividing the channel quantity of the second convolution layer by the channel quantity of the first convolution layer. During actual application, a definition of the channel quantity ratio between the first convolution layer and the second convolution layer may be determined based on a front-rear location relationship between the first convolution layer and the second convolution layer.

That the channel quantity of the first convolution layer is proportional to that of the second convolution layer may be further expressed as that the first convolution layer has a channel quantity constraint with the second convolution layer.

For example, step S410 includes: obtaining the channel quantity of the first convolution layer based on the channel quantity ratio between the first convolution layer and the second convolution layer, and the channel quantity of the second convolution layer.

For example, it is assumed that the channel quantity ratio between the first convolution layer and the second convolution layer is defined as a ratio obtained by dividing the channel quantity of the first convolution layer by the channel quantity of the second convolution layer, and the channel quantity ratio is 1.2. If the channel quantity of the second convolution layer is 5, the channel quantity of the first convolution layer is obtained through calculation as 6; or, if the channel quantity of the second convolution layer is 3, a value 4 obtained by rounding off a product (3.6) between 3 and 1.2 is used as the channel quantity of the first convolution layer.

It should be understood that, a product of a channel quantity of a convolution layer x and a corresponding channel quantity ratio may be a decimal. In this case, an integer near the decimal is used as a channel quantity of the other convolution layer y (that is, a convolution layer having a channel quantity constraint with the convolution layer x). There may be a plurality of manners of obtaining the channel quantity of the convolution layer y based on the decimal, for example, rounding down or rounding up. This is not limited in this embodiment of this application.

The first convolution layer may represent each convolution layer in some convolution layers of the convolutional neural network, or may represent each convolution layer of the convolutional neural network. In other words, in this embodiment of this application, at least some of the convolution layers in the convolutional neural network are set to have a channel quantity constraint.

Optionally, in the embodiment shown in FIG. 4, the first convolution layer represents each convolution layer in some convolution layers of the convolutional neural network, and the second convolution layer represents another convolution layer other than the first convolution layer in the some convolution layers.

Alternatively, the solution in this embodiment may be further expressed as that some convolution layers in the convolutional neural network have a channel quantity constraint. That some convolution layers in the convolutional neural network have a channel quantity constraint means that each convolution layer in some convolution layers of the convolutional neural network has a channel quantity constraint with at least one other convolution layer.

For example, the convolutional neural network includes five convolution layers: a convolution layer 1, a convolution layer 2, a convolution layer 3, a convolution layer 4, and a convolution layer 5, where the convolution layer 1 has a channel quantity constraint with the convolution layer 2. It is assumed that the convolutional neural network has 20 optional channel quantities. In this example, a total quantity of combinations of channel quantities of the convolutional neural network is equal to 20×1×20×20×20 (160,000).

With reference to the example of the conventional technology described above, when the convolutional neural network includes five convolution layers and there are 20 optional channel quantities, the total quantity of combinations of channel quantities is equal to 20×20×20×20×20 (3.2 million).

It may be understood that, compared with the conventional technology, in a same case, in this embodiment of this application, a total quantity of combinations of channel quantities can be greatly reduced, so that a search space of the convolutional neural network is reduced. Therefore, a calculation amount of convolutional neural network search is reduced.

Optionally, in the embodiment shown in FIG. 4, the first convolution layer represents each convolution layer of the convolutional neural network, and the second convolution layer represents another convolution layer other than the first convolution layer in the convolutional neural network.

Alternatively, the solution in this embodiment may be further expressed as that all convolution layers in the convolutional neural network have a channel quantity constraint. That all convolution layers in the convolutional neural network have a channel quantity constraint means that each convolution layer in the convolutional neural network has a channel quantity constraint with at least one other convolution layer.

For example, the convolutional neural network includes five convolution layers: a convolution layer 1, a convolution layer 2, a convolution layer 3, a convolution layer 4, and a convolution layer 5, where the convolution layer 1 has a channel quantity constraint with the convolution layer 2, the convolution layer 1 further has a channel quantity constraint with the convolution layer 3, and the convolution layer 4 has a channel quantity constraint with the convolution layer 5. It is assumed that the convolutional neural network has 20 optional channel quantities. In this example, a total quantity of combinations of channel quantities of the convolutional neural network is equal to 20×1×1×20×1 (400).

With reference to the example of the conventional technology described above, when the convolutional neural network includes five convolution layers and there are 20 optional channel quantities, the total quantity of combinations of channel quantities is equal to 20×20×20×20×20 (3.2 million).

It may be understood that, compared with the conventional technology, in a same case, in this embodiment of this application, a total quantity of combinations of channel quantities can be effectively reduced, so that a search space of the convolutional neural network is reduced. Therefore, a calculation amount of convolutional neural network search is reduced.

As described above, in this embodiment of this application, at least some convolution layers in the convolutional neural network have a channel quantity constraint, that is, each convolution layer in at least some convolution layers of the convolutional neural network has a channel quantity constraint with another convolution layer. A pairing manner of convolution layers having a channel quantity constraint in the at least some convolution layers may be flexibly set based on a requirement. This is not limited in this embodiment of this application.

S420: Construct a search space of the convolutional neural network based on the channel quantity of each convolution layer.

Optionally, the search space of the convolutional neural network is constructed based on the channel quantity of each convolution layer, and a layer quantity of the convolutional neural network and a size of a convolution kernel on each convolution layer. The layer quantity of the convolutional neural network may be preset.

It should be noted that, after the layer quantity of the convolutional neural network, the channel quantity of each convolution layer, and the size of the convolution kernel of each convolution layer are determined, an implementation of constructing the search space of the convolutional neural network based on these parameters is the conventional technology, and details are not described in this application.

S430: Search for a neural architecture of the convolutional neural network based on the search space of the convolutional neural network.

For example, the neural architecture of the convolutional neural network may be searched for based on the search space of the convolutional neural network by using a plurality of different search strategies.

It should be further noted that, an implementation of searching for the neural architecture of the convolutional neural network based on the search space is the conventional technology, Details are not described in this application.

In this embodiment of this application, a ratio constraint on a channel quantity of a convolution layer is set, so that a total quantity of combinations of channel quantities can be reduced, and a search space of the convolutional neural network is reduced. Therefore, a calculation amount of convolutional neural network search is reduced.

Further, a ratio constraint between each convolution layer in the convolutional neural network with another convolution layer is set, so that a total quantity of combinations of channel quantities can be further reduced. Therefore, a calculation amount of convolutional neural network search is further reduced.

It should be understood that, compared with the conventional technology, in this embodiment of this application, a calculation amount of convolutional neural network search can be reduced. Therefore, a quantity of GPUs required to perform convolutional neural architecture search is also small. For example, in some application scenarios, a good convolutional neural architecture can be obtained through searching within 8 hours by using only one GPU.

In this embodiment of this application, one convolution layer may have a channel quantity constraint with one or more other convolution layers.

Optionally, in the embodiment shown in FIG. 4, convolution layers of the convolutional neural network include a third convolution layer, where a channel quantity of the third convolution layer is also proportional to that of the first convolution layer. In other words, the channel quantity of the first convolution layer is proportional to both the channel quantity of the second convolution layer and the channel quantity of the third convolution layer.

In this embodiment, the first convolution layer has channel quantity constraints with both the second convolution layer and the third convolution layer. It may be understood that the second convolution layer also has a channel quantity constraint with the third convolution layer.

It should be noted that "the first convolution layer has channel quantity constraints with both the second convolution layer and the third convolution layer" described in this embodiment indicates that the first convolution layer may separately have a channel quantity constraint with a plurality of convolution layers. That the first convolution layer can only have channel quantity constraints with two convolution layers is not limited.

It should be understood that, if more convolution layers have channel quantity constraints with the first convolution layer, more convolution layers have only one option of channel quantity.

For example, the convolutional neural network includes five convolution layers: a convolution layer 1, a convolution layer 2, a convolution layer 3, a convolution layer 4, and a convolution layer 5, where the convolution layer 1 has a channel quantity constraint with both the convolution layer 2 and the convolution layer 3. It is assumed that the convolutional neural network has 20 optional channel quantities. In this example, a total quantity of combinations of channel quantities of the convolutional neural network is equal to 20×1×1×20×20 (8,000). The convolution layer 2 and the convolution layer 3 have only one option of channel quantity.

In another example, the convolutional neural network includes five convolution layers: a convolution layer 1, a convolution layer 2, a convolution layer 3, a convolution layer 4, and a convolution layer 5, where the convolution layer 1 has channel quantity constraints with the convolution layer 2, the convolution layer 3, and the convolution layer 4. It is assumed that the convolutional neural network has 20 optional channel quantities. In this example, a total quantity of combinations of channel quantities of the convolutional neural network is equal to 20×1×1×1×20 (400). The convolution layer 2, the convolution layer 3, and the convolution layer 4 have only one option of channel quantity.

In this embodiment of this application, a ratio constraint between a same convolution layer and a plurality of convolution layers is set, so that a total quantity of combinations of channel quantities can be further reduced, and a search space of a convolutional neural network is further reduced. Therefore, a calculation amount of convolutional neural network search is further reduced.

Optionally, in the embodiment shown in FIG. 4, in convolution layers having a channel quantity constraint, each convolution layer may alternatively have a channel quantity constraint with only one other convolution layer.

For example, the convolutional neural network includes five convolution layers: a convolution layer 1, a convolution layer 2, a convolution layer 3, a convolution layer 4, and a convolution layer 5, where the convolution layer 1 has a channel quantity constraint with the convolution layer 2, and the convolution layer 4 has a channel quantity constraint with the convolution layer 5. It is assumed that the convolutional neural network has 20 optional channel quantities. In this example, a total quantity of combinations of channel quantities of the convolutional neural network is equal to 20×1×20×20×1 (8,000).

It should be understood that, compared with the conventional technology, in this embodiment, a total quantity of combinations of channel quantities can also be reduced, so that a search space of the convolutional neural network is reduced. Therefore, a calculation amount of convolutional neural network search is reduced.

In this embodiment of this application, the first convolution layer and the second convolution layer may be consecutive layers, or may be non-consecutive layers. In other words, two convolution layers with a channel quantity constraint may be consecutive layers, or may be non-consecutive layers.

Two consecutive convolution layers indicate that one of the two convolution layers is a convolution layer previous to the other convolution layer (or in other words, one of the two convolution layers is a convolution layer next to the other convolution layer). In other words, there is no other convolution layer between the two convolution layers.

Two non-consecutive convolution layers indicate that there is one or more other convolution layers between the two convolution layers.

Optionally, in some embodiments, the first convolution layer and the second convolution layer are two consecutive convolution layers in the convolutional neural network.

When the first convolution layer represents each convolution layer in the convolutional neural network, that the first convolution layer and the second convolution layer are two consecutive convolution layers in the convolutional neural network means that there is a channel quantity constraint between every two consecutive convolution layers in the convolutional neural network.

For example, the convolutional neural network includes five convolution layers: a convolution layer 1, a convolution layer 2, a convolution layer 3, a convolution layer 4, and a convolution layer 5, where the convolution layer 1 is a convolution layer previous to the convolution layer 2, the convolution layer 2 is a convolution layer previous to the convolution layer 3, and by analogy, the convolution layer 4 is a convolution layer previous to the convolution layer 5. The convolution layer 1 has a channel quantity constraint with the convolution layer 2, the convolution layer 2 has a channel quantity constraint with the convolution layer 3, the convolution layer 3 has a channel quantity constraint with the convolution layer 4, and the convolution layer 4 has a channel quantity constraint with the convolution layer 5.

In one aspect, in this example, it is equivalent to that the convolution layer 1 has channel quantity constraints with the convolution layer 2, the convolution layer 3, the convolution layer 4, and the convolution layer 5. Assuming that the convolutional neural network has 20 optional channel quantities, a total quantity of combinations of channel quantities of the convolutional neural network is equal to 20×1×1×1×1 (20). It may be understood that, a channel quantity constraint between every two consecutive convolution layers in the convolutional neural network is set, so that a total quantity of combinations of channel quantities can be fully reduced.

In a further aspect, in this example, a shape of the convolutional neural architecture is basically determined based on a channel quantity ratio between every two consecutive convolution layers. In other words, in this embodiment, a basic shape of the convolutional neural architecture can be controlled by setting a channel quantity ratio between every two consecutive convolution layers, to help construct a better convolutional neural architecture.

It should be understood that, in this embodiment, a channel quantity constraint between every two consecutive convolution layers in the convolutional neural network is set, so that the shape of the convolutional neural architecture can be controlled by setting a channel quantity ratio between every two consecutive convolution layers having the channel quantity constraint, to help construct a better convolutional neural architecture.

When the first convolution layer represents each convolution layer in some convolution layers of the convolutional neural network, that the first convolution layer and the second convolution layer are two consecutive convolution layers in the convolutional neural network means that there is a channel quantity constraint between every two consecutive convolution layers in some convolution layers of the convolutional neural network.

It should be understood that, in this embodiment, the shape of the convolutional neural architecture may also be controlled by setting a channel quantity ratio between every two consecutive convolution layers having a channel quantity constraint, to help construct a better convolutional neural architecture.

Optionally, in some embodiments, the first convolution layer and the second convolution layer are two consecutive convolution layers in the convolutional neural network. In addition, the first convolution layer is a convolution layer previous to the second convolution layer; convolution layers of the convolutional neural network further include a fourth convolution layer, and the fourth convolution layer is a convolution layer next to the second convolution layer, where a ratio obtained by dividing the channel quantity of the second convolution layer by the channel quantity of the fourth convolution layer is equal to a ratio obtained by dividing the channel quantity of the first convolution layer by the channel quantity of the second convolution layer.

In other words, in this embodiment, channel quantity ratios between any two consecutive convolution layers having a channel quantity constraint in the convolutional neural network are all the same (that is, equal to a same value). Alternatively, in this embodiment of this application, channel quantities of any two up-down consecutive convolution layers in the convolutional neural architecture keep a same ratio.

For example, the convolutional neural network includes five convolution layers: a convolution layer 1, a convolution layer 2, a convolution layer 3, a convolution layer 4, and a convolution layer 5, where the convolution layer 1 is a convolution layer previous to the convolution layer 2, the convolution layer 2 is a convolution layer previous to the convolution layer 3, and by analogy, the convolution layer 4 is a convolution layer previous to the convolution layer 5. For example, when a five-layer convolutional neural architecture is generated at one time, a randomly selected channel quantity ratio (FR) is 1.2, so that the channel quantity of the convolution layer 1 is 1.2 times the channel quantity of the convolution layer 2, the channel quantity of the convolution layer 2 is 1.2 times the channel quantity of the convolution layer 3, and by analogy, the channel quantity of the convolution layer 4 is 1.2 times the channel quantity of the convolution layer 5. In this example, there are only two variables when a quantity of combinations of channel quantities of the convolution layers is calculated. One is the channel quantity ratio (FR), and the other is the channel quantity of the convolution layer 5.

For example, in step S410, assuming that a total parameter quantity of the convolutional neural architecture is already set, after the skip connection and the size of the convolution kernel of each convolution layer are determined, an expected channel quantity (for example, denoted as filters (N)) of the last convolution layer (for example, the convolution layer 5 in this example) may be calculated based on the channel quantity ratio (FR) of the convolution layers. Then, the channel quantity of each convolution layer may be calculated based on the filters (N) and the channel quantity ratio (FR), where N represents a quantity layer of the convolutional neural network (excluding the input layer and the output layer).

For example, the total parameter quantity of the convolutional neural architecture is 3993.

FIG. 5 is a schematic diagram in which all channel quantity ratios (corresponding to FR shown in FIG. 5) between any two consecutive convolution layers having a channel quantity constraint in the convolutional neural network are 1.2, 1.0, and 0.8. In FIG. 5, a rectangular box represents a convolution layer, and a width of the rectangular box represents a size of the channel quantity of the current convolution layer. A larger rectangular box width indicates a larger channel quantity. A smaller rectangular box width indicates a smaller channel quantity. The uppermost rectangular box represents the first convolution layer, and the lowermost rectangular box represents the fifth convolution layer. The FR represents a ratio obtained by dividing the channel quantity of the former by the channel quantity of the latter in two consecutive convolution layers.

FIG. 5 also shows a schematic diagram of a shape of a convolutional neural architecture in which a convolution layer has no channel quantity constraint. It can be learned that, when the convolution layer has no channel quantity constraint, the channel quantity of each convolution layer is random, causing a very large total quantity of combinations of channel quantities of the convolution layers. Consequently, a search space is very large.

However, when the convolution layer has the channel quantity constraint, relatively, the total quantity of combinations of channel quantities of the convolution layers can be reduced, so that the search space can be reduced.

In addition, it can also be learned from FIG. 5 that, when the convolution layer has no channel quantity constraint, the channel quantity of each convolution layer is random, and the shape of the convolutional neural architecture is completely random and cannot be controlled.

In this embodiment, a same channel quantity ratio between any two consecutive convolution layers having a channel quantity constraint in the convolutional neural network is set, so that the shape of the convolutional neural architecture is basically determined by the channel quantity ratio (FR). Therefore, the shape of the convolutional neural architecture can be controlled, to help construct a better convolutional neural architecture.

Therefore, in this embodiment, a same channel quantity constraint between every two consecutive convolution layers in the convolutional neural network is set, so that a shape of the convolutional neural architecture can be controlled better, to help construct a better convolutional neural architecture.

Optionally, in some embodiments, the first convolution layer and the second convolution layer may also be two non-consecutive convolution layers in the convolutional neural network.

For example, the convolutional neural network includes five convolution layers: a convolution layer 1, a convolution layer 2, a convolution layer 3, a convolution layer 4, and a convolution layer 5, where the convolution layer 1 is a convolution layer previous to the convolution layer 2, the convolution layer 2 is a convolution layer previous to the convolution layer 3, and by analogy, the convolution layer 4 is a convolution layer previous to the convolution layer 5. The convolution layer 1 has a channel quantity constraint with the convolution layer 3, the convolution layer 2 has a channel quantity constraint with the convolution layer 4, and the convolution layer 1 has a channel quantity constraint with the convolution layer 5. Assuming that the convolutional neural network has 20 optional channel quantities, a total quantity of combinations of channel quantities of the convolutional neural network is equal to 20×20×1×1×1 (400).

In this embodiment of this application, the channel quantity ratio between a plurality of convolution layers having a channel quantity constraint may be randomly selected. This helps construct convolutional neural architectures with different shapes, thereby facilitating full search for possible convolutional neural architectures.

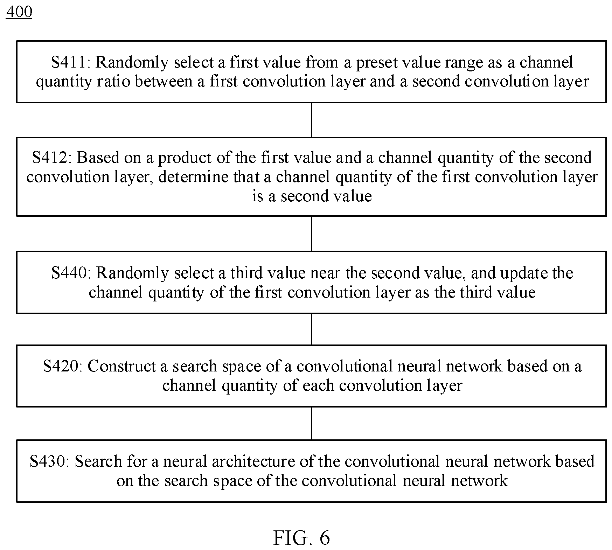

Optionally, as shown in FIG. 6, in the embodiment shown in FIG. 4, step S410 includes step S411 and step S412.

S411: Randomly select a first value from a preset value range as a channel quantity ratio between the first convolution layer and the second convolution layer.

For example, the preset value range is [0.8, 2.5]. Assuming that the first value is 1.2, the channel quantity of the first convolution layer is made to be 1.2 times that of the second convolution layer.

For example, in step S410, when a convolutional neural architecture is generated at any one time, a value FR is randomly selected within a preset value range (for example, [0.8, 2.5]), where the value FR indicates that a ratio between the channel quantity of a previous convolution layer and the channel quantity of a next convolution layer is equal to the value FR. For example, the ratio between the channel quantity of the former and the channel quantity of the latter in any two consecutive convolution layers in the convolutional neural network is made to be the value FR.

S412: Based on the product of the first value and the channel quantity of the second convolution layer, determine that the channel quantity of the first convolution layer is the second value.

It should be understood that, the second value is an integer. If the product of the first value and the channel quantity of the second convolution layer is an integer, the second value may be equal to the product of the first value and the channel quantity of the second convolution layer. When the product of the first value and the channel quantity of the second convolution layer is not an integer, the second value may be a value obtained by performing rounding processing on the product of the first value and the channel quantity of the second convolution layer, where the rounding processing may be rounding up or rounding down.

In this embodiment, the channel quantity ratio between the first convolution layer and the second convolution layer is randomly selected from the preset value range, so that convolutional neural architectures with different shapes can be constructed.

It should be understood that, in this embodiment of this application, the channel quantity ratio between convolution layers may also be preset. For example, the channel quantity ratio between the convolution layers is determined based on an application requirement.

In this embodiment of this application, the channel quantity of the convolution layer having the channel quantity constraint may also be randomly selected near a value calculated based on the channel quantity ratio.

Optionally, as shown in FIG. 6, in the embodiment shown in FIG. 4, step S410 includes the foregoing steps S411 and S412. Before step S420 (constructing the search space of the convolutional neural network based on the channel quantity of each convolution layer), the method 400 further includes step S440.

S440: Randomly select a third value near the second value, and update the channel quantity of the first convolution layer as the third value.

For example, a value may be randomly selected from integers whose absolute values of differences from the second value do not exceed a threshold as the channel quantity of the first convolution layer. The threshold is, for example, 0.5, 1, 1.5, or another value. During application, a value of the threshold may be determined based on a specific requirement.

In another example, a third value that is s times the second value may be used as the channel quantity of the first convolution layer, and a product between s and the second value is an integer. A value of s may be determined based on a specific requirement.

In another example, a value may also be randomly selected based on the second value as the channel quantity of the first convolution layer by using another preset rule.

In this embodiment, the channel quantity of the convolution layer with a channel quantity constraint may be further randomly selected near a value calculated based on the channel quantity ratio. This facilitates fuller search for possible convolutional neural architectures.

As described above, in step S420, the search space of the convolutional neural network may be constructed based on the channel quantity of each convolution layer, and a layer quantity of the convolutional neural network and a size of a convolution kernel on each convolution layer.

The layer quantity of the convolutional neural network may be preset, or may be randomly selected.

The size of the convolution kernel on each convolution layer of the convolutional neural network may also be randomly selected.

For example, the size of the convolution kernel on each convolution layer is randomly selected from the preset value range.

It should be understood that, in a process of constructing the search space of the convolutional neural network, when the size of the convolution kernel on each convolution layer is randomly selected, full search for the convolutional neural architecture can be facilitated.

In another example, in step S420, the method further includes setting a total parameter quantity of the convolutional neural architecture. For example, the total parameter quantity of the convolutional neural architecture is 3993.

In another example, in step S420, the method further includes randomly generating a skip connection based on the layer quantity of the convolutional neural network.

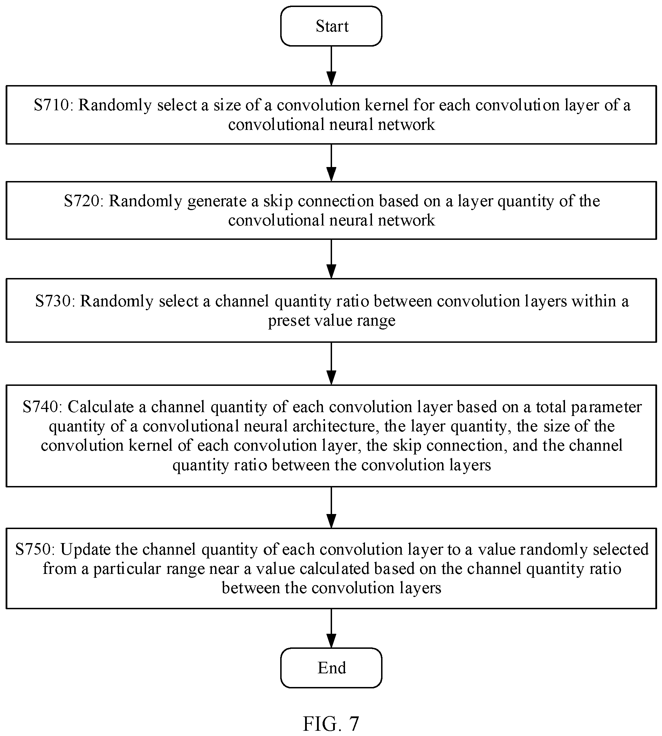

For example, in a process of constructing a convolutional neural architecture each time, a schematic flow of a method for determining the channel quantity on each convolution layer is shown in FIG. 7. In the example of FIG. 7, there is a channel quantity constraint between every two consecutive convolution layers in the convolutional neural network, and channel quantity ratios between any two consecutive convolution layers having a channel quantity constraint are all the same (that is, equal to a same value FR).

S710: Randomly select the size of the convolution kernel for each convolution layer of the convolutional neural network.

S720: Randomly generate a skip connection based on the layer quantity of the convolutional neural network.

S730: Randomly select the channel quantity ratio (FR) between convolution layers within the preset value range.

The channel quantity ratio (FR) between convolution layers represents a ratio between the channel quantity of the former and the channel quantity of the latter in any two consecutive convolution layers in the convolutional neural network.

S740: Calculate the channel quantity of each convolution layer based on the total parameter quantity of the convolutional neural architecture, the layer quantity, the size of the convolution kernel of each convolution layer, the skip connection, and the channel quantity ratio (FR) between the convolution layers.

S750: Update the channel quantity of each convolution layer to a value randomly selected from a particular range near the value calculated based on the channel quantity ratio (FR) between the convolution layers (it should be understood that, the value is an integer).

For example, in the method 400 provided in the foregoing embodiment, step S410 may include step S710 to step S740 in FIG. 7, and step S440 may include step S750 in FIG. 7.

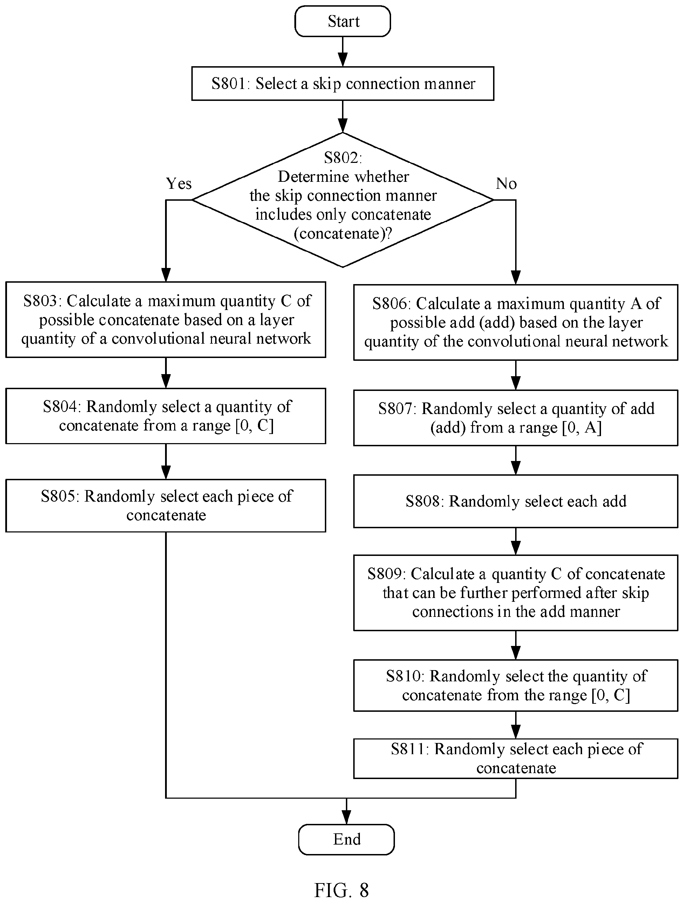

For example, in a process of constructing a convolutional neural architecture each time, a schematic flow of a method for generating a skip connection is shown in FIG. 8. For example, in the embodiment shown in FIG. 7, step S720 includes step S801 to step S811 shown in FIG. 8.

S801: Select a skip connection manner.

For example, one manner is randomly selected from the following two manners as the skip connection manner:
(1) Only concatenate (concatenate) is included.
(2) Both add (add) and concatenate (concatenate) are included.

S802: Determine whether the skip connection manner includes only concatenate (concatenate), and if the skip connection manner includes only concatenate, proceed to step S803, or if the skip connection manner does not include only concatenate, proceed to step S806.

S803: Calculate a maximum quantity C of possible concatenate (concatenate) based on the layer quantity of the convolutional neural network.

S804: Randomly select a quantity of skip connections in the concatenate (concatenate) manner from a range [0, C].

S805: Randomly select each piece of concatenate (concatenate).

S806: Calculate a maximum quantity A of possible add (add) based on the layer quantity of the convolutional neural network.

S807: Randomly select the quantity of add (add) from a range [0, A].

S808: Randomly select each skip connection in the add (add) manner.

S809: Calculate a quantity C of skip connections in the concatenate (concatenate) manner that can be further performed by the convolutional neural network after skip connections in the add (add) manner.

S810: Randomly select a quantity of skip connections in the concatenate (concatenate) manner from the range [0, C].

S811: Randomly select each skip connection in the concatenate (concatenate) manner.

It can be learned based on the foregoing description that, in this embodiment of this application, a ratio constraint on a channel quantity of a convolution layer is set, so that a total quantity of combinations of channel quantities can be reduced, and a search space of a convolutional neural network is reduced. Therefore, a calculation amount of convolutional neural network search is reduced.

For example, this embodiment of this application may be applied to neural architecture search of the convolutional neural network used for processing image data.

Optionally, the convolutional neural network in the embodiment shown in FIG. 4 is applied to an image processing task; and step S430 includes: searching for the neural architecture of the convolutional neural network based on the search space of the convolutional neural network by using training data of the image processing task.

For example, the image processing task is super-resolution (super-resolution, SR). Super-resolution is a technology that improves a resolution of an original image by using hardware or software. For example, a process of obtaining a high-resolution image by using a series of low-resolution images or a single low-resolution image is super-resolution reconstruction.

For example, this embodiment of this application may be applied to a triple super-resolution convolutional neural architecture search system.

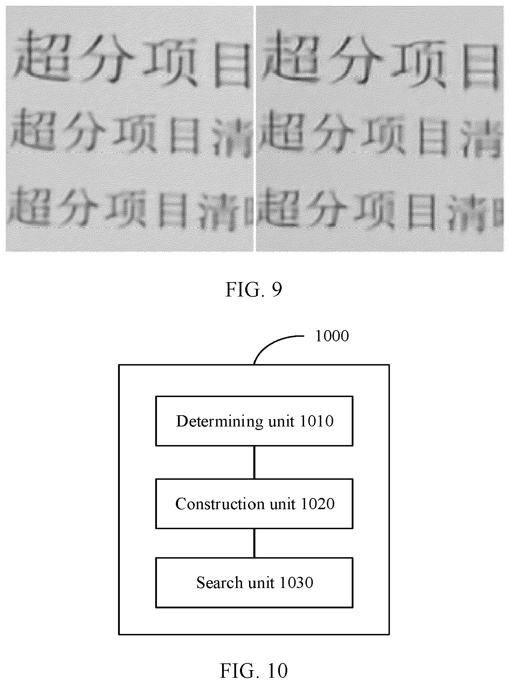

A simulation experiment performed by using an example in which an application scenario is super-resolution scenario shows that, when the solution provided in this embodiment of this application is used to perform convolutional neural architecture search, 364 convolutional neural architectures can be automatically searched out within 8 hours by using one GPU. Moreover, an effect of performing super-resolution by using the optimal convolutional neural architecture obtained through searching is better than that of using the artificially designed convolutional neural architecture, and an effect comparison diagram is shown in FIG. 9.

In FIG. 9, the left side is an effect of performing super-resolution by using the optimal convolutional neural architecture obtained through searching in this embodiment of this application, and the right side is an effect of performing super-resolution by using an artificially designed convolutional neural architecture. It can be learned that a ringing effect around a text border in the left image is less than that in the right image, and an effect of the left image is better.

The embodiments described in this description may be independent solutions, or may be combined based on intrinsic logic. These solutions all fall within the protection scope of this application.

The foregoing describes the method embodiment provided in this application, and the following describes apparatus embodiments provided in this application. It should be understood that the description of the apparatus embodiments corresponds to the description of the method embodiment. Therefore, for content not described in detail, refer to the foregoing method embodiment. For brevity, details are not described herein again.

As shown in FIG. 10, an embodiment of this application provides a neural architecture search apparatus 1000. The apparatus 1000 may be configured to perform the method 400 in the foregoing embodiment. The apparatus 1000 includes a determining unit 1010, a construction unit 1020, and a search unit 1030.

The determining unit 1010 is configured to determine a channel quantity of each convolution layer in a convolutional neural network, where the channel quantity of a first convolution layer is proportional to that of a second convolution layer.

The construction unit 1020 is configured to construct a search space of the convolutional neural network based on the channel quantity of each convolution layer.

The search unit 1030 is configured to search for a neural architecture of the convolutional neural network based on the search space of the convolutional neural network.

Optionally, convolution layers of the convolutional neural network include a third convolution layer, where a channel quantity of the third convolution layer is also proportional to that of the first convolution layer.

Optionally, the first convolution layer and the second convolution layer are two consecutive convolution layers in the convolutional neural network.

Optionally, the first convolution layer is a convolution layer previous to the second convolution layer; convolution layers of the convolutional neural network include a fourth convolution layer, and the fourth convolution layer is a convolution layer next to the second convolution layer, where a ratio obtained by dividing the channel quantity of the second convolution layer by the channel quantity of the fourth convolution layer is equal to a ratio obtained by dividing the channel quantity of the first convolution layer by the channel quantity of the second convolution layer.

Optionally, the determining unit 1010 is configured to: randomly select a first value from a preset value range as a channel quantity ratio between the first convolution layer and the second convolution layer; and determine that the channel quantity of the first convolution layer is a second value based on a product between the first value and the channel quantity of the second convolution layer.

Optionally, the determining unit 1010 is further configured to: before the construction unit 1020 constructs the search space of the convolutional neural network based on the channel quantity of each convolution layer, randomly select a third value near the second value, and update the channel quantity of the first convolution layer as the third value.

Optionally, the construction unit 1020 is configured to construct the search space of the convolutional neural network based on the channel quantity of each convolution layer, and a layer quantity of the convolutional neural network and a size of a convolution kernel on each convolution layer.

Optionally, the convolutional neural network is applied to an image processing task; and the search unit 1030 is configured to: search for the neural architecture of the convolutional neural network based on the search space of the convolutional neural network by using training data of the image processing task.

For example, a product implementation form of the neural architecture search apparatus 1000 provided in this embodiment of this application is program code that may run on a computer.

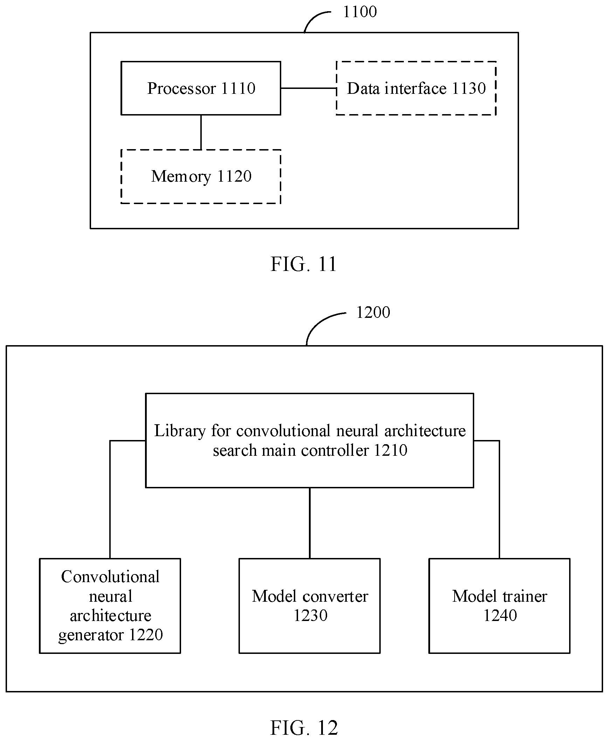

As shown in FIG. 11, an embodiment of this application further provides a neural architecture search apparatus 1100. The apparatus 1100 includes a processor 1110, the processor 1110 is coupled to a memory 1120, the memory 1120 is configured to store computer programs or instructions, and the processor 1110 is configured to execute the computer programs or instructions stored in the memory 1120, to enable the method in the foregoing method embodiment to be executed.

Optionally, as shown in FIG. 11, the apparatus 1100 may further include the memory 1120.

Optionally, as shown in FIG. 11, the apparatus 1100 may further include a data interface 1130, and the data interface 1130 is configured to perform data transmission with outside.

For example, the apparatus 1100 is configured to perform the method 400 in the foregoing embodiment.

In another example, the apparatus 1100 is configured to implement the method in the embodiment shown in FIG. 7.

In still another example, the apparatus 1100 is configured to implement the method in the embodiment shown in FIG. 8.

As shown in FIG. 12, an embodiment of this application further provides a neural architecture search apparatus 1200. The apparatus 1200 may be configured to perform the method 400 in the foregoing embodiment. The apparatus 1200 includes a library for convolutional neural architecture search main controller 1210, a convolutional neural architecture generator 1220, a model converter 1230, and a model trainer 1240.

The library for convolutional neural architecture search main controller 1210 is configured to control the convolutional neural architecture generator 1220, the model converter 1230, and the model trainer 1240.

For example, the library for convolutional neural architecture search main controller 1210 is configured to perform step S410 in the embodiment shown in FIG. 4.

In another example, the library for convolutional neural architecture search main controller 1210 is configured to perform step S410 and step S420 in the embodiment shown in FIG. 6.

The convolutional neural architecture generator 1220 is configured to generate a convolutional neural architecture on which search is to be performed.

For example, the convolutional neural architecture generator 1220 is configured to perform step S420 in the method 400 provided in the foregoing method embodiment.

The model converter 1230 is configured to convert the convolutional neural architecture generated by the convolutional neural architecture generator 1220 into a convolutional neural network model.

The model trainer 1240 is configured to train the convolutional neural network model obtained through conversion by the model converter 1230, to obtain an evaluation index of the convolutional neural network model.

For example, the model converter 1230 and the model trainer 1240 are used as a whole for step S430 in the method 400 provided in the foregoing method embodiment.

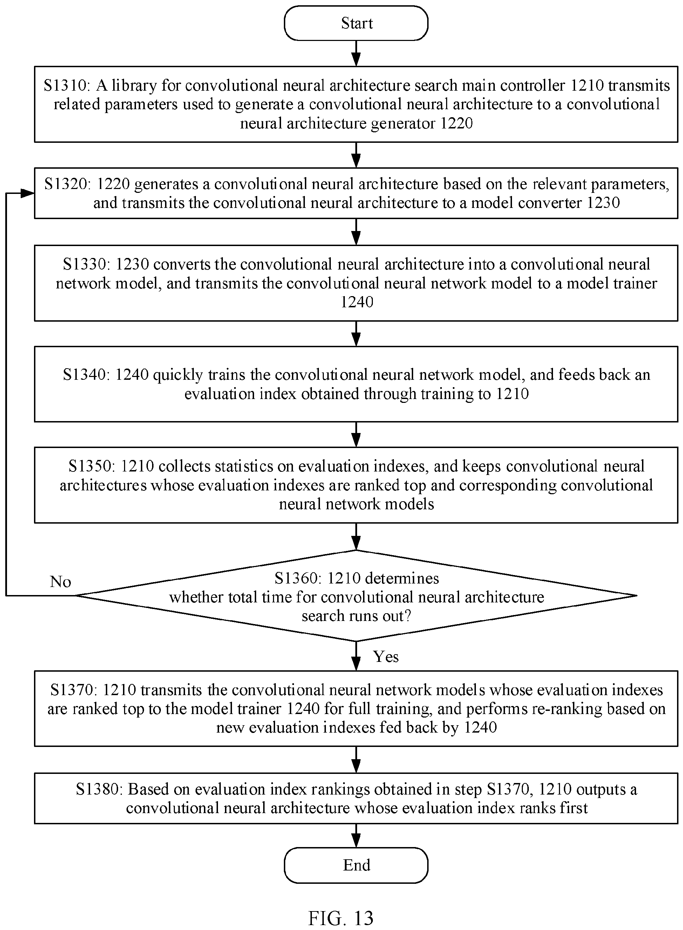

For example, a schematic flow of performing automated convolutional neural architecture search by the apparatus 1200 is shown in FIG. 13.

S1310: The library for convolutional neural architecture search main controller 1210 transmits related parameters used to generate the convolutional neural architecture to the convolutional neural architecture generator 1220.

For example, the library for convolutional neural architecture search main controller 1210 is invoked by a script file, and the library for convolutional neural architecture search main controller 1210 receives relevant parameters that are used for generating the convolutional neural architecture and that are transmitted by the script file.

The related parameters used for generating the convolutional neural architecture include, for example, a layer quantity of the convolutional neural network, a total parameter quantity of the convolutional neural network, a size of a convolution kernel, a channel quantity ratio between convolution layers, and a value option of the channel quantity of the convolution layer.

For description about the channel quantity ratio between convolution layers, refer to the foregoing method embodiment, and details are not described herein again.

S1320: The convolutional neural architecture generator 1220 generates a convolutional neural architecture (or referred to as constructing a convolutional neural architecture) based on the relevant parameters transmitted by the library for convolutional neural architecture search main controller 1210, and transmits the convolutional neural architecture to the model converter 1230.

For example, in a process of constructing a convolutional neural architecture each time, the convolutional neural architecture generator 1220 randomly selects the channel quantity ratio between convolution layers, randomly selects the channel quantity of the convolution layer based on a value calculated based on the channel quantity ratio, and selects the size of the convolution kernel of the convolution layer, and randomly establishes a skip connection.

S1330: The model converter 1230 converts the convolutional neural architecture generated by the convolutional neural architecture generator 1220 into a convolutional neural network model, and transmits the convolutional neural network model to the model trainer 1240.

S1340: The model trainer 1240 quickly trains the convolutional neural network model, and feeds back an evaluation index obtained after the training to the library for convolutional neural architecture search main controller 1210.

S1350: The library for convolutional neural architecture search main controller 1210 collects statistics on evaluation indexes, and keeps convolutional neural architectures whose evaluation indexes are ranked top and corresponding convolutional neural network models.

For example, the library for convolutional neural architecture search main controller 1210 keeps convolutional neural architectures whose evaluation indexes are ranked top ten, and corresponding convolutional neural network models.

S1360: The library for convolutional neural architecture search main controller 1210 determines whether total time for the convolutional neural architecture search runs out, and if the total time for the convolutional neural architecture search runs out, proceeds to step S1370; or if the total time for the convolutional neural architecture search does not run out, proceeds to step S1320.

For example, the total time for the convolutional neural architecture search is 8 hours.

S1370: The library for convolutional neural architecture search main controller 1210 transmits the convolutional neural network models whose evaluation indexes are ranked top to the model trainer 1240 for full training, and performs re-ranking based on new evaluation indexes fed back by the model trainer 1240.

S1380: Based on the evaluation index rankings obtained in step S1370, the library for convolutional neural architecture search main controller 1210 outputs a convolutional neural architecture whose evaluation index ranks first. The output convolutional neural architecture herein may be regarded as the optimal convolutional neural architecture obtained through convolutional neural architecture search.

So far, the apparatus 1200 completes the automated convolutional neural architecture search.

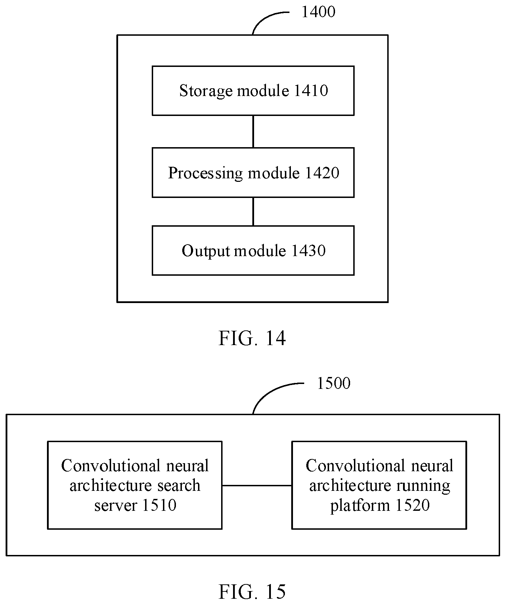

As shown in FIG. 14, an embodiment of this application further provides a server device 1400. The server device 1400 includes a storage module 1410, a processing module 1420, and an output module 1430. The processing module 1420 is any one of the apparatus 1000, the apparatus 1100, and the apparatus 1200 that are provided in the foregoing embodiments.

The storage module 1410 is configured to store training data required for convolutional neural architecture search.

For example, the training data includes a train set and a test set.

In machine learning, a sample is generally divided into three parts: a train set (train set), a validation set (validation set), and a test set (test set). The train set is used to establish a model, and the test set is used to test performance of a finally selected optimal model.

The processing module 1420 is configured to perform neural architecture search on the convolutional neural network by using the training data stored in the storage module 1410.

The output module 1430 is configured to output the convolutional neural architecture obtained through searching by the processing module 1420.

For example, this embodiment of this application may be applied to a triple super-resolution convolutional neural architecture search system. For example, the storage module 1410 is configured to store a triple super-resolution data set, for example, including a triple super-resolution train set and a triple super-resolution test set. The convolutional neural architecture output by the output module 1430 is a convolutional neural architecture applied to triple super-resolution.

As shown in FIG. 15, an embodiment of this application further provides a neural architecture search system 1500, including a convolutional neural architecture search server 1510 and a convolutional neural architecture running platform 1520. The convolutional neural architecture search server 1510 is the server device 1400 provided in the foregoing embodiment.

The convolutional neural architecture search server 1510 is configured to deploy a convolutional neural architecture obtained through searching onto the neural architecture running platform 1520.

The convolutional neural architecture running platform 1520 is configured to run the deployed convolutional neural architecture.

For example, the convolutional neural architecture running platform 1520 is a terminal or another application platform of the convolutional neural network.

For example, the convolutional neural architecture running platform 1520 is a mobile phone.

For example, this embodiment of this application may be applied to a triple super-resolution convolutional neural architecture search system. Super-resolution processing may be performed on the convolutional neural architecture running platform 1520.

An embodiment of this application further provides a computer-readable medium. The computer-readable medium stores program code for execution by a device, and the program code is used to perform the method in the foregoing embodiment.

An embodiment of this application further provides a computer program product including instructions. When the computer program product is run on a computer, the computer is enabled to perform the method in the foregoing embodiment.

An embodiment of this application further provides a chip. The chip includes a processor and a data interface. The processor reads, by using the data interface, instructions stored in a memory, to perform the method of the foregoing embodiment.

Optionally, in an implementation, the chip may further include a memory, the memory stores instructions, the processor is configured to execute the instructions stored in the memory, and when the instructions are executed, the processor is configured to perform the method in the foregoing embodiment.

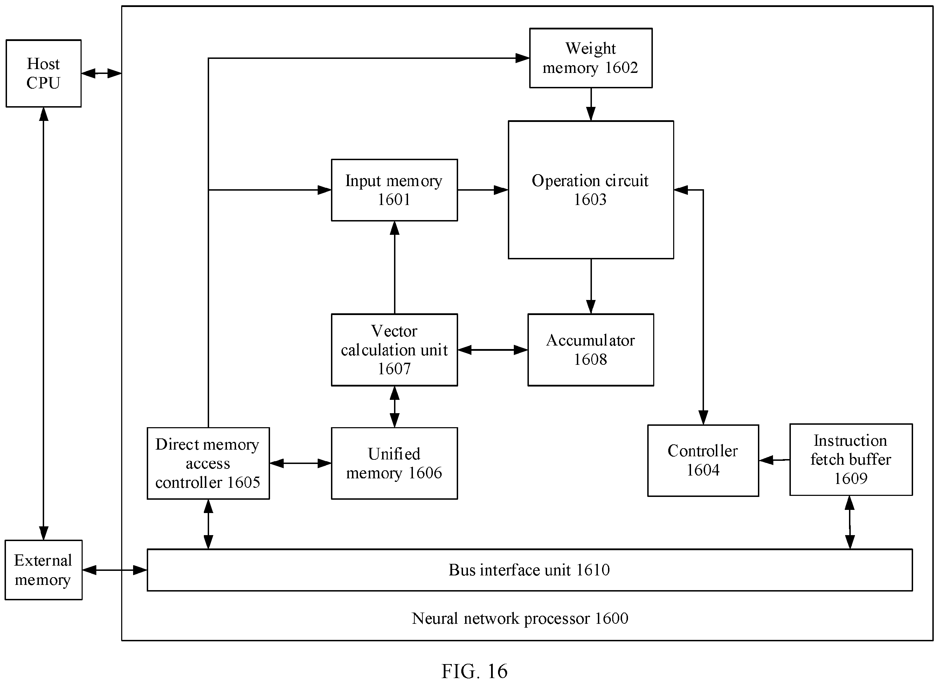

FIG. 16 shows a hardware structure of a chip according to an embodiment of this application. The chip includes a neural network processor 1600. The chip may be disposed in any one or more of the following apparatuses:
the apparatus 1000 shown in FIG. 10, the apparatus 1100 shown in FIG. 11, the apparatus 1200 shown in FIG. 12, the server device 1400 shown in FIG. 14, and the system 1500 shown in FIG. 15.

The method 400 in the foregoing method embodiment, the method in the embodiment shown in FIG. 7, or the method in the embodiment shown in FIG. 8 may be implemented in the chip shown in FIG. 16.

The neural network processor 1600 NPU is mounted to a host CPU (Host CPU) as a coprocessor, and the host CPU allocates tasks. A core part of the neural network processor 1600 is an operation circuit 1603. A controller 1604 controls the operation circuit 1603 to obtain data in a memory (a weight memory 1602 or an input memory 1601) and perform operation.

In some implementations, the operation circuit 1603 includes a plurality of processing units (process engine, PE) inside. In some implementations, the operation circuit 1603 is a two-dimensional systolic array. The operation circuit 1603 may be alternatively a one-dimensional systolic array or another electronic circuit that can perform mathematical operation such as multiplication and addition. In some implementations, the operation circuit 1603 is a general-purpose matrix processor.

For example, it is assumed that there is an input matrix A, a weight matrix B, and an output matrix C. The operation circuit 1603 obtains data corresponding to the matrix B from the weight memory 1602, and buffers the data on each PE in the operation circuit 1603. The operation circuit 1603 obtains data of the matrix A from the input memory 1601 and performs matrix operation with the matrix B, and stores a partial result or a final result of an obtained matrix into an accumulator (accumulator) 1608.

A vector calculation unit 1607 may perform further processing on an output of the operation circuit 1603, such as vector multiplication, vector addition, exponential operation, logarithm operation, and size comparison. For example, the vector calculation unit 1607 may be used for network calculation of a non-convolutional/non-FC layer in a neural network, such as pooling (pooling), batch normalization (batch normalization), and local response normalization (local response normalization).

In some implementations, the vector calculation unit 1607 can store processed output vectors into a unified memory (which may also be referred to as a unified buffer) 1606. For example, the vector calculation unit 1607 may apply a non-linear function to the output of the operation circuit 1603, such as vectors whose values are accumulated, to generate an activation value. In some implementations, the vector calculation unit 1607 generates a normalized value, a merged value, or both. In some implementations, the processed output vectors can be used as an activation input to the operation circuit 1603, for example, for use in subsequent layers in the neural network.

The method 400 in the foregoing method embodiment, the method in the embodiment shown in FIG. 7, or the method in the embodiment shown in FIG. 8 may be performed by 1603 or 1607.

The unified memory 1606 is configured to store input data and output data.

Input data in an external memory may be transferred to the input memory 1601 and/or the unified memory 1606, weight data in the external memory may be stored into the weight memory 1602, and data in the unified memory 1606 may be stored into the external memory by using a direct memory access controller 1605 (direct memory access controller, DMAC).

A bus interface unit (bus interface unit, BIU) 1610 is configured to implement interaction between the host CPU, the DMAC, and an instruction fetch buffer 1609 by using a bus.

The instruction fetch buffer (instruction fetch buffer) 1609 connected to the controller 1604 is configured to store instructions used by the controller 1604.

The controller 1604 is configured to invoke the instruction buffered in the buffer 1609, to control a working process of the operation accelerator.

Generally, the unified memory 1606, the input memory 1601, the weight memory 1602, and the instruction fetch buffer 1609 are all on-chip (On-chip) memories, the external memory is a memory external to the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

Unless otherwise defined, all technical and scientific terms used herein have the same meanings as would be generally understood by a person skilled in the art of this application. Terms used in the description of this application are merely for the purpose of describing specific embodiments, but are not intended to limit this application.

It should be noted that various numerical symbols such as first, second, third, fourth, and the like in this description are merely intended for distinguishing purposes for ease of description and are not used to limit the scope of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes various media that can store program code, for example, a universal serial bus flash disk (USB flash disk, UFD) (the UFD may also be referred to as a USB flash drive for short), a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural architecture search method, comprising:
determining a channel quantity of each convolution layer in a convolutional neural network, wherein a channel quantity of a first convolution layer is proportional to that of a second convolution layer;
constructing a search space of the convolutional neural network based on the channel quantity of each convolution layer; and
searching for a neural architecture of the convolutional neural network based on the search space of the convolutional neural network.

2. The method according to claim 1, wherein convolution layers of the convolutional neural network comprise a third convolution layer, and a channel quantity of the third convolution layer is also proportional to that of the first convolution layer.

3. The method according to claim 1 or 2, wherein the first convolution layer and the second convolution layer are two consecutive convolution layers in the convolutional neural network.

4. The method according to claim 3, wherein the first convolution layer is a convolution layer previous to the second convolution layer; and
the convolution layers of the convolutional neural network comprise a fourth convolution layer, and the fourth convolution layer is a convolution layer next to the second convolution layer, wherein
a ratio obtained by dividing the channel quantity of the second convolution layer by the channel quantity of the fourth convolution layer is equal to a ratio obtained by dividing the channel quantity of the first convolution layer by the channel quantity of the second convolution layer.

5. The method according to any one of claims 1 to 4, wherein the determining a channel quantity of each convolution layer in a convolutional neural network comprises:
randomly selecting a first value from a preset value range as a channel quantity ratio between the first convolution layer and the second convolution layer; and
determining, based on a product of the first value and the channel quantity of the second convolution layer, that the channel quantity of the first convolution layer is a second value.

6. The method according to claim 5, wherein before the constructing a search space of the convolutional neural network based on the channel quantity of each convolution layer, the method further comprises:
randomly selecting a third value near the second value, and updating the channel quantity of the first convolution layer as the third value.

7. The method according to any one of claims 1 to 6, wherein the constructing a search space of the convolutional neural network based on the channel quantity of each convolution layer comprises:
constructing the search space of the convolutional neural network based on the channel quantity of each convolution layer, and a layer quantity of the convolutional neural network and a size of a convolution kernel on each convolution layer.

8. The method according to any one of claims 1 to 7, wherein the convolutional neural network is applied to an image processing task; and
the searching for a neural architecture of the convolutional neural network based on the search space of the convolutional neural network comprises:
searching for the neural architecture of the convolutional neural network based on the search space of the convolutional neural network by using training data of the image processing task.

9. A neural architecture search apparatus, comprising:
a determining unit, configured to determine a channel quantity of each convolution layer in a convolutional neural network, wherein the channel quantity of a first convolution layer is proportional to that of a second convolution layer;
a construction unit, configured to construct a search space of the convolutional neural network based on the channel quantity of each convolution layer; and
a search unit, configured to search for a neural architecture of the convolutional neural network based on the search space of the convolutional neural network.

10. The apparatus according to claim 9, wherein convolution layers of the convolutional neural network comprise a third convolution layer, and a channel quantity of the third convolution layer is also proportional to that of the first convolution layer.

11. The apparatus according to claim 9 or 10, wherein the first convolution layer and the second convolution layer are two consecutive convolution layers in the convolutional neural network.

12. The apparatus according to claim 11, wherein the first convolution layer is a convolution layer previous to the second convolution layer; and
the convolution layers of the convolutional neural network comprise a fourth convolution layer, and the fourth convolution layer is a convolution layer next to the second convolution layer, wherein
a ratio obtained by dividing the channel quantity of the second convolution layer by the channel quantity of the fourth convolution layer is equal to a ratio obtained by dividing the channel quantity of the first convolution layer by the channel quantity of the second convolution layer.

13. The apparatus according to any one of claims 9 to 12, wherein the determining unit is further configured to:
randomly select a first value from a preset value range as a channel quantity ratio between the first convolution layer and the second convolution layer; and
determine, based on a product of the first value and the channel quantity of the second convolution layer, that the channel quantity of the first convolution layer is a second value.

14. The apparatus according to claim 13, wherein the determining unit is further configured to: before the construction unit constructs the search space of the convolutional neural network based on the channel quantity of each convolution layer, randomly select a third value near the second value, and update the channel quantity of the first convolution layer as the third value.

15. The apparatus according to any one of claims 9 to 14, wherein the construction unit is configured to construct the search space of the convolutional neural network based on the channel quantity of each convolution layer, and a layer quantity of the convolutional neural network and a size of a convolution kernel on each convolution layer.

16. The apparatus according to any one of claims 9 to 15, wherein the convolutional neural network is applied to an image processing task; and
the search unit is configured to: search for the neural architecture of the convolutional neural network based on the search space of the convolutional neural network by using training data of the image processing task.

17. A server device, comprising:
a storage module, configured to store training data required for convolutional neural architecture search;
the neural architecture search apparatus according to any one of claims 9 to 16, configured to perform neural architecture search on a convolutional neural network by using the training data stored in the storage module; and
an output module, configured to output a convolutional neural architecture obtained by the neural architecture search apparatus through searching.

18. A neural architecture search system, comprising a neural architecture running platform and the server device according to claim 17, wherein
the server device is configured to deploy a convolutional neural architecture obtained through searching onto the neural architecture running platform; and
the neural architecture running platform is configured to run the deployed convolutional neural architecture.

19. A data processing apparatus, comprising:
a memory, configured to store executable instructions; and
a processor, configured to invoke and run the executable instructions in the memory, to perform the method according to any one of claims 1 to 8.

20. A computer-readable storage medium, wherein the computer-readable storage medium stores program instructions, and when the program instructions are run on a processor, the method according to any one of claims 1 to 8 is implemented.

21. A computer program product, wherein the computer program product comprises computer program code, and when the computer program code is run on a computer, the method according to any one of claims 1 to 8 is implemented.
